(19)

Europäisches
Patentamt
European
Patent Office
Office européen
des brevets

(11) **EP 4 707 854 A1**

(12) **EUROPEAN PATENT APPLICATION**

(43) Date of publication:
**11.03.2026 Bulletin 2026/11**

(21) Application number: **25196338.5**

(22) Date of filing: **18.08.2025**

(51) International Patent Classification (IPC):
**G01S 7/41** *(2006.01)*     **G01S 13/34** *(2006.01)*
**G01S 13/58** *(2006.01)*     **G01S 13/931** *(2020.01)*

(52) Cooperative Patent Classification (CPC):
**G01S 7/417; G01S 13/34; G01S 13/584;
G01S 13/931**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **06.09.2024 US 202418826599**

(71) Applicant: **NXP USA, Inc.
Austin, TX 78735 (US)**

(72) Inventors:
• **Klioui, Youval
  5656AG Eindhoven (NL)**

• **van Sloun, Ruud
  5656AG Eindhoven (NL)**
• **Ravindran, Satish
  5656AG Eindhoven (NL)**
• **Youn, Jihwan
  5656AG Eindhoven (NL)**
• **Shi, Binbin
  5656AG Eindhoven (NL)**

(74) Representative: **Colaiuda, Antonella
NXP Semiconductors Germany GmbH
Intellectual Property Group
Beiersdorfstraße 12
22529 Hamburg (DE)**

(54) **STRUCTURED NEURAL NETWORK FOR AUTOMOTIVE RADAR DIRECTION OF ARRIVAL ESTIMATION**

(57)     In an automotive radar system, a measurement vector is determined using signals received a plurality of radar receiver modules. An expression is determined that defining an iteration of an optimization problem configured to determine an optimized output amplitude vector based on the measurement vector, wherein the expression includes a first parameter that is a hermitian-centrohermitian matrix or a circulant matrix. The automotive radar system includes a neural network and each node of the neural network solves iterations of the expression to determine an optimized value of the first parameter. A final node of the neural network determines the optimized output amplitude vector based on the optimized value of the first parameter and an estimated direction of arrival of a first object is determined using the optimized output amplitude vector.

FIG. 2

EP 4 707 854 A1

## Description

### FIELD

The present disclosure generally relates to signal processing in vehicle radar systems and, more specifically, to improved approaches for direction of arrival estimation in a vehicle radar system.

### BACKGROUND

A radar system, such as an automotive radar system that may be used in civil automotive applications, transmits an electromagnetic signal and receives back reflections of the transmitted signal. The time delay and/or time delay variation between the transmitted and received signals can be determined and used to calculate the distance and/or the speed of objects, such as cars, trucks, motorcycles, traffic signs, roadway fixtures, and the like, causing the reflections, respectively. For example, in civil automotive applications, automotive radar systems can be used to determine the distance and/or the speed of oncoming vehicles and other obstacles.

Automotive radar systems enable the implementation of advanced driver-assistance system (ADAS) functions that are likely to enable increasingly safe driving and, eventually, fully autonomous driving platforms. Such systems use radar systems as the primary sensor for ADAS operations.

In a radar system, signal processing requires the analysis of range-Doppler datasets when determining the direction of arrival (DoA) of objects represented in those datasets. In radar systems, this processing requires the manipulation of large data sets requiring significant computer and memory requirements, which can increase the cost and complexity of such radar systems.

### SUMMARY

This Summary section is neither intended to be, nor should be, construed as being representative of the full extent and scope of the present disclosure. Additional benefits, features and one or more embodiment of the present disclosure are set forth in the attached figures and in the description hereinbelow, and as described by the claims. Accordingly, it should be understood that this Summary section may not contain all of the aspects and one or more embodiment claimed herein.

Additionally, the disclosure herein is not meant to be limiting or restrictive in any manner. Moreover, the present disclosure is intended to provide an understanding to those of ordinary skill in the art of one or more representative embodiments supporting the claims. Thus, it is important that the claims be regarded as having a scope including constructions of various features of the present disclosure insofar as they do not depart from the scope of the methods and apparatuses consistent with the present disclosure (including the originally filed claims). Moreover, the present disclosure is intended to encompass and include obvious improvements and modifications of the present disclosure.

In some aspects, the techniques described herein relate to a radar system including: a plurality of transmitter modules configured to transmit a plurality of transmitted radar signals; a plurality of receiver modules configured to receive reflections of the plurality of transmitted radar signals reflected by at least one object and to generate signals based on the received reflections; and a processor configured to: determine a measurement vector using signals received by the plurality of receiver modules, implement a neural network including a plurality of nodes arranged in a plurality of layers; determine an optimized output amplitude vector, wherein the optimized output amplitude vector defines a radar signal spectrum having peaks associated with the at least one object, by performing steps including: determining an expression defining an iteration of an optimization problem configured to determine the optimized output amplitude, wherein the expression includes a plurality of learnable parameters, causing each node of the plurality of nodes in the neural network to iteratively solve the expression to determine optimized values of the plurality of learnable parameters, and determining, by a final node in the plurality of nodes, the optimized output amplitude vector based on the optimized values of the plurality of learnable parameters determined by another node in the plurality of nodes, wherein the optimized output amplitude vector is a sparse signal vector; and determine an estimated direction of arrival of a first object using the optimized output amplitude vector.

In some aspects, the techniques described herein relate to a radar system including: a plurality of transmitter modules configured to transmit a plurality of transmitted radar signals; a plurality of receiver modules configured to receive reflections of the plurality of transmitted radar signals reflected by at least one object; a plurality of processor cores, wherein each processing core in the plurality of processing cores is associated with layers of a neural network; and a processor configured to: determine a measurement vector using signals received by the plurality of receiver modules, determining an expression defining an iteration of an optimization problem configured to determine an optimized output amplitude vector, wherein the expression includes a first parameter that is a hermitian-centrohermitian matrix or a circulant matrix, causing each processor core of the plurality of processor cores to solve iterations of the expression to determine an optimized value of the first parameter, causing a final processor core of the plurality of processor cores to determine optimized output amplitude vector based on the optimized value of the first parameter, wherein the optimized output amplitude vector is a sparse signal vector, and determine an estimated direction of arrival of a first object using the optimized output amplitude vector.

In some aspects, the techniques described herein relate to a method, including: determining a measurement vector using signals received a plurality of radar receiver modules; determining an expression defining an iteration of an optimization problem configured to determine an optimized output amplitude vector based on the measurement vector, wherein the expression includes a first parameter that is a hermitian-centrohermitian matrix or a circulant matrix; causing each node of a neural network to solve iterations of the expression to determine an optimized value of the first parameter; causing a final node of the neural network to determine optimized output amplitude vector based on the optimized value of the first parameter; and determining an estimated direction of arrival of a first object using the optimized output amplitude vector.

## BRIEF DESCRIPTION OF THE DRAWINGS

The accompanying drawings are included to provide a further understanding of the disclosure and are incorporated in and constitute a part of this specification.

In the drawings:

FIG. 1A is a simplified schematic block diagram of an automotive radar system that includes a radar unit connected to a radar controller processor.

FIG. 1B graphically depicts, at a high-level, the processing steps that may be implemented by the processor of the automotive radar system of FIG. 1A to process digital signals.

FIG. 2 is a block diagram depicting a system including functional components of a direction of arrival estimation engine.

FIG. 3 is a block diagram depicting functional components of a core of a direction of arrival estimation engine.

FIG. 4 is a flowchart depicting method 400 for determining a DoA of an object using an ADMM-Net neural network implemented by a plurality of processing cores.

## DETAILED DESCRIPTION

The present disclosure generally relates to signal processing in vehicle radar systems and, more specifically, to improved approaches for direction of arrival (DoA) estimation in a vehicle radar system.

High resolution radar is an important modality to implement autonomous driving capabilities. This may be particularly true in instances involving automotive radar systems providing data for implementing advanced driver-assistance system (ADAS) functions.

Existing approaches used by conventional automotive radar systems for object detection involve using compressive sensing principles in which the signals received by the radar system's antenna array are converted into an output measurement vector y. The measurement vector can be expressed as $y=Ax+n$, where n is thermal noise, A is the dictionary matrix used to encode the signals transmitted by the radar system, and x, the output amplitude vector, is a sparse vector (e.g., a vector in which a majority of data points have a value of zero), which is indicative of the surroundings of the radar systems. A compressive analysis process is then utilized to determine the value of the sparse vector x based on the other values and, by analyzing that vector, objects in the vicinity of the radar system can be identified as well as their respective locations (e.g., DoA) and relative velocities.

As conventionally implemented, this compressive sensing approach can suffer from various limitations, including the need to perform a large number of iterative optimizations for solutions to converge in order to estimate the sparse codes required for the determination of the vector x and subsequent object detection. The performance of so many iterations may not be practicable for real time applications, as the computational requirements can be very high, which can greatly increase device cost and complexity. To mitigate those requirements, conventional approaches therefore rely upon prior assumptions about the underlying data distributions that may not reflect the real world data distributions in the immediate vicinity of a vehicle. With such a potential mismatch, the prior assumptions can lead to sub optimal automotive radar system performance, creating substantial need for manual heuristic parameter tuning.

To remedy these difficulties with conventional approaches, the present disclosure provides an approach for processing radar signals and, specifically, performing direction of arrival (DoA) estimation on sparse vectors that requires no *a priori* information about object distribution including an anticipated number of objects in a vicinity of the vehicle (required for conventional approaches), thereby increasing generalization to real world scenarios and improved robustness of the present system. Additionally, the present approach provides deterministic runtime results while making efficient of available computing hardware resources. In particular, and as detailed below, the present approach can require relatively little memory and computing power as compared to conventional solutions.

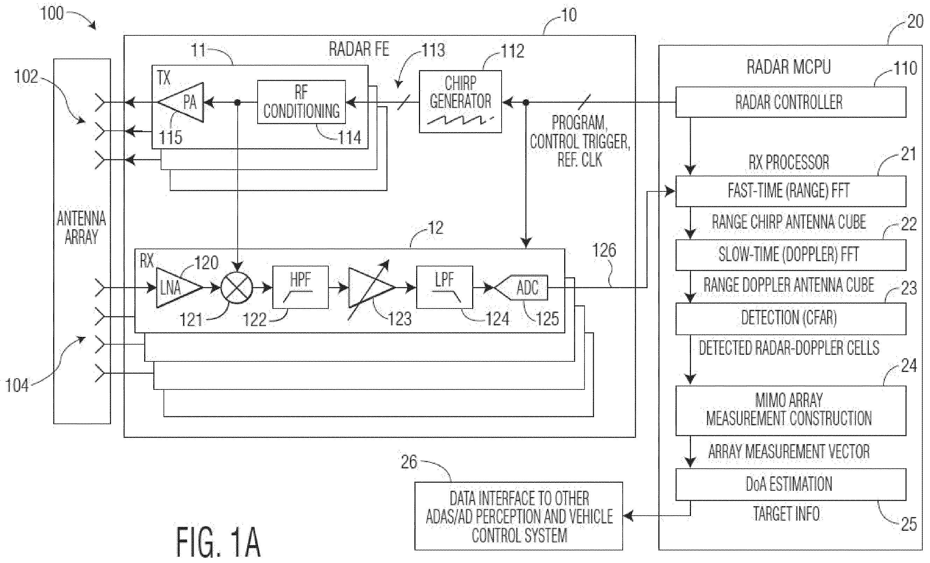

FIG. 1A depicts a simplified schematic block diagram of an automotive radar system 100 that includes a radar unit 10 connected to a radar controller processor 20. In one or more embodiment, the radar unit 10 may be embodied as a line-replaceable unit (LRU) or modular component that is designed to be replaced quickly at an operating location. Similarly, the radar controller processor 20 may be embodied as a line-replaceable unit (LRU) or modular component. Radar system 100 may be implemented in integrated circuit form with the radar unit 10 and the radar controller processor 20 formed with separate integrated circuits (chips) or with a single chip, depending on the application.

Within radar system 100 each radar unit 10 includes one or more transmitting antenna elements 102 and receiving antenna elements 104 connected, respectively, to one or more radio frequency (RF) transmitter (TX) units 11 and receiver (RX) units 12. For example, each radar unit 10 is shown as including individual antenna elements 102, 104 (e.g., TX1,i, RX1,j) connected, respectively, to three transmitter modules 11 and four receiver modules 12, but these numbers are not limiting and other numbers are also possible, such as four transmitter modules 11 and six receiver modules 12, or a single transmitter module 11 and/or a single receiver module 12.

Each radar unit 10 also includes a chirp generator 112 that is configured and connected to supply a chirp input signal to the transmitter modules 11. To this end, the chirp generator 112 is connected to receive a separate and independent local oscillator (LO) signal and a chirp start trigger signal. The operation of transmitter modules 11 may be controlled by a controller 110 that may be implemented, in whole or in part, by processor 20. Chirp signals 113 are generated and transmitted to transmitter modules 11, usually following a pre-defined transmission schedule, where the chirp signals 113 are filtered at the RF conditioning module 114 and amplified at the power amplifier 115 before being fed to the corresponding transmit antenna 102 (TX1,i) and radiated.

The radar signal transmitted by the transmitter antenna elements 102 (TX1,i, TX2,i) may be reflected by an object, and part of the reflected radar signal reaches the receiver antenna elements 104 (RX1,i) at radar unit 10. At each receiver module 12, the received radio frequency antenna signal is amplified by a low noise amplifier (LNA) 120 and then fed to a mixer 121 where the received signal is mixed with the transmitted chirp signal generated by the RF conditioning module 114. The resulting intermediate frequency signal is fed to a first high-pass filter (HPF) 122. The resulting filtered signal is fed to a first variable gain amplifier 123 which amplifies the signal before feeding it to a first low pass filter (LPF) 124. This re-filtered signal is fed to an analog/digital converter (ADC) 125 and is output by each receiver module 12 as a digital signal 126 (D1). The receiver module compresses object signals echoes of various delays into multiple sinusoidal tones whose frequencies correspond to the round-trip delay of the echo signal.

Radar system 100 includes radar controller processing unit 20 that is connected to supply input control signals to the radar system 10 (e.g., via controller 110) and to receive therefrom digital output signals (e.g., digital signal 126) generated by the receiver modules 12.

In one or more embodiment, the radar controller processing unit 20 may be embodied as a micro-controller unit (MCU) or other processing unit that is configured and arranged for signal processing tasks such as, but not limited to, object identification, computation of object distance, object velocity, and object direction, and generating control signals. The radar controller processing unit 20 may, for example, be configured to generate calibration signals, receive data signals, receive sensor signals, generate frequency spectrum shaping signals (such as ramp generation in the case of frequency modulated continuous wave (FMCW) radar) and/or register programming or state machine signals for RF (radio frequency) circuit enablement sequences. In addition, the radar controller processor 20 may be configured to program the transmitter modules 11 to operate in a time-division fashion by sequentially transmitting chirps for coordinated communication between the transmit antenna elements 102 TX1,i, RX1,j.

Radar controller processor 20 is configured to process digital signal 126 to ultimately identify a distance to detected objects as well as an angular position and velocity of those objects with respect to radar system 100. These data points can be output in the form of a point cloud, which identifies, in a three-dimensional space, the distance to detected objects as well as a confidence level for each object detection. Typically, digital signal 126 includes a sequence of digital values representing magnitudes of radar signals received by receiving antenna elements 104 captured over time. Typically, each digital value is associated with a particular chirp number and sample number.

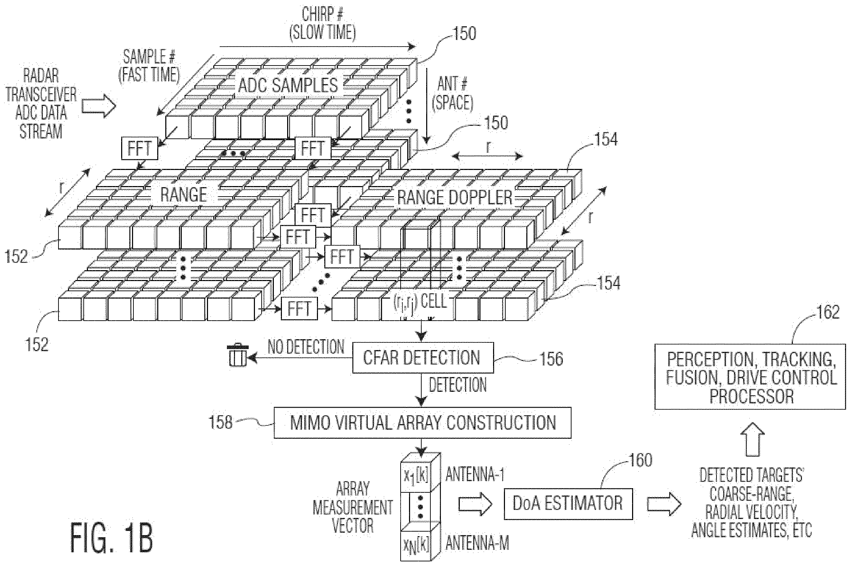

FIG. 1A shows the series of signal processing steps that are implemented by processor 20 in order to properly process digital signal 126 received from radar unit 10 to identify potential nearby objects. To complement FIG. 1A, FIG. 1B graphically depicts, at a high-level, the processing steps that may be implemented by processor 20 to process digital signals 126.

In particular, the content of digital signals 126 is made up of a series of data frames that include a number of digital sample values (e.g., captured by ADCs 125 of receiver units 12) where the sample values are arranged in a two-dimensional matrix that is generated based upon a sequence of pulsed signals. The data structure making up a single captured frame is depicted by matrix 150 in FIG. 1B. As depicted, a single frames-worth of data in matrix 150 includes a two-dimensional matrix with a first dimension that is referred to as the "fast time" dimension and represents data values that were captured from the different pulsed signals. The second dimension of matrix 150 is referred to as the "slow time" dimension and represents data values that were captured in response to the different chirp signals that may be included within a particular pulsed signal that was transmitted by transmitter modules 11. As shown in FIG. 1B, signal processing may involve processing multiple frames of data represented by the several matrixes 150. In the present disclosure, that may involve processing individual frames of data, as described herein, to identify sets of peak values within the frames. Or, alternatively and as described herein, this may involve processing different subsections of the ADC data stream to identify sets of candidate peak values, which are ultimately combined across an entire radar cube to perform final peak detection. Typically, during such signal processing, frames of data represented by a matrix 150 are captured for each receive channel. As such, FIG. 1B depicts multiple matrixes 150 that are each associated with a different receive channel and may be received as input data to the signal processing chain.

For subsections of radar cube data that may comprise data represented by matrix 150, radar controller processor 20 initially performs a fast-time range Fast Fourier transform (FFT) 21 (FIG. 1A) to generate new frame data represented by matrix 152. The FFT 21 is executed on the 1-D arrays of data (i.e., the signal) associated with each distinct chirp in the original input matrix 150 to generate a 1-D transformed signal of the same length. The FFTs of each chirp in the original input frame represented by matrix 150 are combined to generate the transformed frame as indicated by matrix 152. This process is repeated for each frame associated with each receive channel. The resulting data frames, which represent range maps, are represented in FIG. 1B as matrixes 152 and can be used to determine distance to particular objects as reflected in the range maps.

In a next step radar controller processor 20 performs an additional Fast Fourier Transform (FFT) 22 (FIG. 1A) (referred to as the slow-time or Doppler-FFT) on the range maps to generate a new range-Doppler frame data represented by matrixes 154. In this step, however, FFT 22 is applied along the opposite dimension from the FFT 21. As such, the FFT 22 is executed on the 1-D arrays of data (i.e., the signal) in matrixes 152 associated with each range bin in the matrix 152 to generate a transformed 1-D signal of the same length. The FFTs of each signal in the frames of matrixes 152 are combined to generate the range-Doppler data frames as indicated by matrixes 154. This process is repeated for each frame associated with each receive channel. The range-Doppler data frames associated with matrixes 154 provide information about the movement of a potential object over time from one sample number to the next. With the data frames associated with matrixes 154 generated, it is possible to process the data encoded therein to begin identifying potential objects and, in the case of a detected object, determine its velocity and direction of arrival.

Accordingly, the radar controller processor 20 performs constant false alarm rate (CFAR) object detection 23 (FIG. 1A), 156 (FIG. 1B).

If a potential object has been detected, radar controller processor 20 performs multiple-input multiple-output (MIMO) array measurement construction 24 (FIG. 1A), 158 (FIG. 1B) to determine the direction of arrival (DoA) for each object 25 (FIG. 1A), 160 (FIG. 1B). The final object information dataset, which may include an object identifier, DoA, and other related information (e.g., object velocity) is then passed by radar controller processor 20 (in step 26, FIG. 1A, 162, FIG. 1B) to an ADAS or other system configured to utilize the object information to control one or more vehicle system.

In automotive radar system, the arrays employed to perform DoA estimation are typically sparse arrays, such as minimum redundancy arrays and co-prime arrays, and contain a relatively few number of elements that are sparsely spread so as to minimize mutual coupling while maximizing the array aperture. Array processing algorithms based on sparse representation theory, such as LASSO, therefore, are often utilized for high resolution DoA estimation. Such algorithms exploit the underlying sparse nature of the processed radar signals with respect to a specific overcomplete basis (also known as dictionary) in order to recover a sparse spectrum whose peaks locations correspond to the a detected objects' angular position.

As conventionally implemented, however, such DoA estimation approaches can have certain limitations that reduce their efficacy. For example, conventional sparse processing requires the execution of iterative optimizations of solver equations to estimate the sparse codes. These optimizations may require a substantial number of iterations before converging on a suitable solution. These many iterations can require a significant amount of computing resources and time and may not be suited to the real-time application of vehicle radar systems. Additionally, conventional approaches require certain *a priori* assumptions about the signal distributions in the underlying data being processed that may not reflect real world data distributions, which can lead to sub optimal vehicle radar system performance.

In some cases, deep neural networks (DNNs) have been utilized in an attempt to optimize the DoA estimation and associated sparse vector recovery processes. Such DNNs are typically trained end to end using large training datasets derived from simulation and/or real-world data. However, these approaches have their own problems. In particular, such data-driven models typically require a massive amount of annotated training data to ensure model robustness against inputs that are unusual or otherwise fall outside of normal distributions. It can be difficult to create annotated training data for such real-world scenarios. Additionally, conventional DNNs require substantial computing resources and can be expensive to implement in hardware. As such, these conventional DNNs typically require substantial dataset pruning and other data processing optimizations to enable their use in conjunction with the relatively low size, weight, and power computing hardware found in vehicle radar systems.

The present disclosure, therefore, provides an imaging automotive radar signal processing approach that can overcome or otherwise mitigate these aforementioned problems. In particular, the present disclosure presents a novel approach to DoA estimation that efficiently processes the output of a vehicle radar MIMO array (e.g., MIMO array measurement construction 24 of FIG. 1A) to determine DoAs to potential objects associated with data peaks identified by CFAR processing (e.g., CFAR 23 of FIG. 1A).

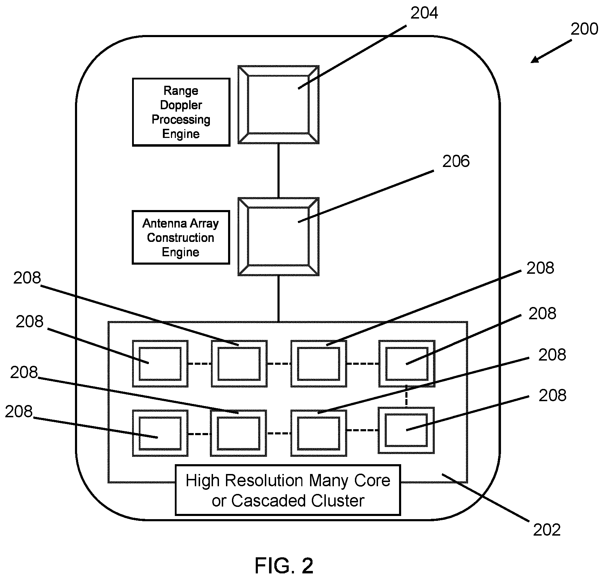

FIG. 2 is a block diagram depicting a system 200 including functional components of the present DoA estimation engine cluster 202. System 200 may, for example, may provide the functionality, of various components of radar processor 20 of FIG. 1A, for example. In particular, portions of cluster 202, as described below, may provide the functionality of range FFT 21, Doppler FFT 22, MIMO array construction 24 of FIG. 1A. System 200 includes range-Doppler processing engine 204, which is configured to receive as input radar cube data and perform fast-time (range) and slow-time (Doppler) FFTs on that data to generate an output range-Doppler data cube. As such, range-Doppler processing engine 204 provides similar functionality to blocks 21 and 22 of radar system 100 of FIG. 1A. Range-Doppler processing engine 204 is also configured to execute CFAR processing (e.g., CFAR detection 23 of FIG. 1A) to identify data peaks in the range-Doppler data cube that may be associated with a reflection by an object at the corresponding range and Doppler location. After completing CFAR detection of such peaks, range-Doppler processing engine 204 is configured to generate an output dataset that corresponds to a set of range-Doppler cells in which peaks (i.e., potential objects) have been detected (e.g., the same dataset output by CFAR detection block 23 of FIG. 1A).

The output of range-Doppler processing engine 204 is further processed by antenna array construction engine 206, which is configured to, using the output of range-Doppler processing engine 204 generate an array measurement vector (e.g., similar to the output of MIMO array measurement construction block 24 of FIG. 1A) that may be used for DoA estimation. In one or more embodiments, the signals received by the plurality of receiver modules are associated with a MIMO virtual array in which antenna elements are evenly spaced from one another by a multiple of a unit value.

The array measurement vector output by antenna array construction engine 206 is then provided as an input to the cluster 202. As illustrated, cluster 202 includes several individual cores 208. Each core 208 comprises a data processing component (e.g., an individual physical data processing element or a defined set of computing resources configured to be assigned a single data processing function) configured to implement a layer of an alternating direction method of multipliers (ADMM) model configured to perform DoA estimation on the input dataset received from antenna array construction engine 206. In various implementations, the cores 208 of system 200 may be implemented using any suitable computing system, such as application-specific integrated circuits (ASICs) or other hardware or software data processing element.

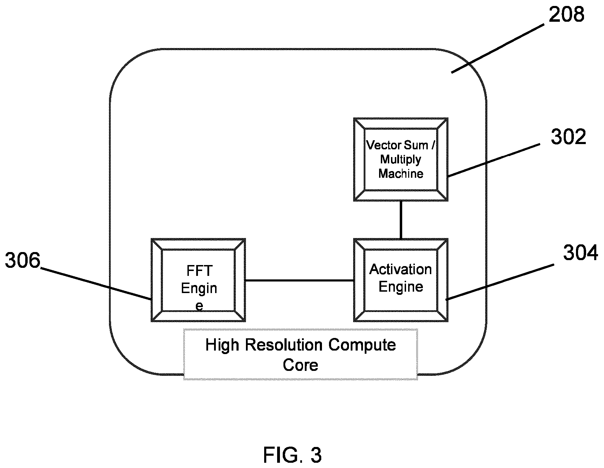

To illustrate, FIG. 3 is a block diagram depicting functional components of each core 208 of system 200. As shown in FIG. 3, each core 208 includes three particular components vector summing/multiplication machine 302, activation engine 304, and FFT engine 306. Vector summing/multiplication machine 302 is a vector processor configured to sum the outputs of activation engine 304, which is a processing unit configured to implement a complex-valued activation function. Finally, FFT engine 306 is a processing unit used to implement multiplications of vectors with DFT and IDFT matrices.

The various functions of core 208 could, in various applications, be implemented using standard computing instruction sets executed by generic central processing unit (CPU) cores or ASICs. Depending on the implementation, cores 208 of system 200 can be implemented as a parallelization of ADMM-Net cores with the number of cores being at least partially determined by the number of potential object detections of the range doppler bin being processed. In that case, each core 208 being dynamically allocated to process a detection out of the several detections. Alternatively, the ADMM-Net model may be implemented by the various cores 208 being configured to separately implement different distinct layers in the ADMM-Net model in a cascaded format.

When processing range-Doppler data from radar system 100, for example, it is presumed that radar system 100 includes N virtual antenna elements 104 positioned at coordinates $d_1, d_2, ..., d_N$ with respect to some arbitrary origin associated with radar system 100. For $K$ objects located at angular positions $\theta_1, \theta_2, ..., \theta_K$ (i.e., at particular DoAs) within the FOV of radar system 100, a single-snapshot signal model can be formulated as

$$\mathbf{y} = \sum_{k=1}^{K} c_k \, \mathbf{a}(\theta_k) + \mathbf{n} \tag{1}$$

In expression (1), $\mathbf{y} \in \mathbb{C}^{N \times 1}$ is the signal received by the radar system (e.g., received by RX antenna elements 104 of radar system 100 of FIG. 1A) spatially sampled across the array of $N$ RX antenna elements 104 of the radar system, $\mathbf{n} \in \mathbb{C}^{N \times 1}$ quantifies the thermal noise of the receivers, $c_k \in \mathbb{C}$ corresponds to the signal power of the signal reflected by the $k$-th object along with that object's phase shift, and $\mathbf{a}(\theta_k)$ is the steering vector corresponding to the angle of arrival $\theta_k$, as shown in expression (2), below:

$$\mathbf{a}(\theta_k) = \left[ \exp\left(-j2\pi \frac{d_1}{\lambda}\sin(\theta_k)\right) \quad \exp\left(-j2\pi \frac{d_2}{\lambda}\sin(\theta_k)\right) \quad \dots \quad \exp\left(-j2\pi \frac{d_N}{\lambda}\sin(\theta_k)\right) \right]^T \quad (2)$$

In performing object detections and, particularly DoA estimation, therefore, the problem can be expressed as the need to compute estimates of the DoA angles $\hat{\theta}_1, \hat{\theta}_2, \dots, \hat{\theta}_K$ of the $K$ objects given a particular received signal y. The compressed sensing framework for performing DoA estimation consists generally in solving the following optimization problem:

$$\min_{\mathbf{x}} \frac{1}{2}||\mathbf{y} - \mathbf{Ax}||_2^2 + \beta||\mathbf{x}||_1 \quad (3)$$

In expression (3), $\beta$ is a regularization hyperparameter that may be predetermined, and A is a dictionary matrix of

the form $\mathbf{A} = \begin{bmatrix} \bar{\mathbf{a}}(d_1) \\ \bar{\mathbf{a}}(d_2) \\ \vdots \\ \bar{\mathbf{a}}(d_{..}) \end{bmatrix}$ where

$$\bar{\mathbf{a}}(d_i) = \left[ \exp\left(j2\pi \frac{d_i}{\lambda}\sin(\bar{\theta}_1)\right) \quad \exp\left(j2\pi \frac{d_i}{\lambda}\sin(\bar{\theta}_2)\right) \quad \dots \quad \exp\left(j2\pi \frac{d_i}{\lambda}\sin(\bar{\theta}_L)\right) \right]$$

and
$\bar{\theta}_1, \bar{\theta}_2, \dots, \bar{\theta}_L$ are angular grid points. The angular grid points in this context refer to a set of predefined angles (in degrees) $\bar{\theta}_1, \bar{\theta}_2, \dots, \bar{\theta}_L$ that are used to determine estimates of the values for the true DoA angles $\theta_1, \theta_2, \dots, \theta_K$. Essentially, for each object DoA $\theta_i$ the approach finds its closest value in the set of grid points $\bar{\theta}_1, \bar{\theta}_2, \dots, \bar{\theta}_L]$ within the FOV of radar system 100 $[\theta_1, \theta_L]$. $d_i$ = $k_i\gamma\lambda$ where $k_i \in \mathbb{Z}$, $\gamma > 0$, and the frequency grid vector $\mathbf{f} = [f_1 \; f_2 \; \dots \; f_L]$ where $f_i = y \sin(\bar{\theta}_i)$.

When solving this problem using a conventional ADMM solution, the recursive equations of ADMM for solving expression (3) are given by the following expressions:

$$\mathbf{x}^{(k)} = (\mathbf{A}^H\mathbf{A} + \rho\mathbf{I})^{-1}\left(\mathbf{A}^H\mathbf{y} + \rho(\mathbf{z}^{(k-1)} - \mathbf{w}^{(k-1)})\right) \quad (4)$$

$$\mathbf{z}^{(k)} = S_{\frac{\beta}{\rho}}\left(\mathbf{x}^{(k)} + \mathbf{w}^{(k-1)}\right) \quad (5)$$

$$\mathbf{w}^{(k)} = \mathbf{w}^{(k-1)} + \mathbf{x}^{(k)} - \mathbf{z}^{(k)} \quad (6)$$

In expressions (4), (5), and (6), $\rho$ is a positive scalar that controls the convergence rate of the recursive algorithm, $S_\beta(.)$ is a soft-thresholding operator, $S_\beta(z) = \exp(j\arg(z))\max(|z| - \beta, 0)$. In conventional approaches, the recursive approach to solving expressions (4), (5), and (6) involves performing gradient descent methodologies to determine values of $\mathbf{x}^{(k)}$, $\mathbf{z}^{(k)}$, $\mathbf{w}^{(k)}$. With those values determined, it is possible to determine a value of the gradient vector a (expression (2)), which, in turns, allows for an estimation of the DoA of the k objects.

In performing this solution, the value $\mathbf{z}^{(k)}$ in expression (6) is replaced with expression (5), and it is defined that $S'_\tau(z) = z - S_\tau(z)$, where $\tau = \beta/\rho$, which results in the following expression:

$$\mathbf{w}^{(k)} = S'_\tau\left(\mathbf{x}^{(k)} + \mathbf{w}^{(k-1)}\right) \quad (7)$$

Expression (5) can then be substituted into expression (4) to replace the value $\mathbf{z}^{(k)}$ and expression (7) can be substituted into expression (4) to replace the value of $\mathbf{w}^{(k)}$, resulting in the following expression:

$$\mathbf{x}^{(k+1)} = (\mathbf{A}^H\mathbf{A} + \rho\mathbf{I})^{-1}\left(\mathbf{A}^H\mathbf{y} + \rho\big(\mathbf{z}^{(k)} - \mathbf{w}^{(k)}\big)\right)$$

$$= (\mathbf{A}^H\mathbf{A} + \rho\mathbf{I})^{-1}\left(\mathbf{A}^H\mathbf{y} + \rho\left(S_\tau\big(\mathbf{x}^{(k)} + \mathbf{w}^{(k-1)}\big) - S'_\tau\big(\mathbf{x}^{(k)} + \mathbf{w}^{(k-1)}\big)\right)\right)$$

$$(8)$$

In expression (8), the following definitions may be utilized such that expression (8) becomes expression (9), below.

$$\mathbf{H} = \mathbf{A}^H\mathbf{A}$$
$$R_\tau(z) = S_\tau(z) - S'_\tau(z) = 2S_\tau(z) - z$$

$$\mathbf{x}^{(k+1)} = (\mathbf{H} + \rho\mathbf{I})^{-1}\left(\mathbf{A}^H\mathbf{y} + \rho R_\tau\big(\mathbf{x}^{(k)} + \mathbf{w}^{(k-1)}\big)\right) \qquad (9)$$

Adding expression (7) to expression (9), and defining $\mathbf{u}^{(k)} = \mathbf{x}^{(k)} + \mathbf{w}^{(k-1)}$, the following expression results:

$$\mathbf{u}^{(k+1)} = (\mathbf{H} + \rho\mathbf{I})^{-1}\left(\mathbf{A}^H\mathbf{y} + \rho R_\tau\big(\mathbf{u}^{(k)}\big)\right) + S'_\tau\big(\mathbf{u}^{(k)}\big) \qquad (10)$$

Expression (10) represents the ADMM iteration problem that must be solved by the ADMM solver to perform the sparse vector recovery described above. In conventional approaches, this problem is solved using a computing resource-intensive iteration process in which the conventional ADMM solver is initialized by setting $\mathbf{u}° = \mathbf{0}$. Using the ADMM solver, after running expression (10) for a total of $K$ iterations an estimate of the radio signal spectrum $\mathbf{x}_{est}$ is obtained using the definition of $\mathbf{u}$ and $\mathbf{w}$:

$$\mathbf{x}_{est} = \mathbf{u}^{(K)} - \mathbf{w}^{(K-1)} = \mathbf{u}^{(K)} - S'_\tau\big(\mathbf{u}^{(K-1)}\big) \qquad (11)$$

In iteratively solving expression (10) to obtain expression (11), the number of iterations $K$ in a conventional approach is usually selected based upon applicable computational and time constraints. As such, the number of iterations $K$ is typically selected before the conventional iterative approach is executed such that the total time $t$ to run the iterative algorithm from start to finish doesn't exceed a maximum value $t\_max$. In many conventional approaches, $K$ is typically less than 50.

Near convergence, with the assumption $\mathbf{u}^{(K)} \approx \mathbf{u}^{(K-1)}$, expression (11) can be approximated using the following expression:

$$\mathbf{x}_{est} \approx S_\tau\big(\mathbf{u}^{(K)}\big) \qquad (12)$$

With the value $\mathbf{x}_{est}$ (i.e., the output amplitude vector) determined, conventional DoA processing proceeds to identify objects and their respective DoAs.

In accordance with the present disclosure, however, deep unrolling of the ADMM approach involves replacing the recurrence equations of expression (10) with a network of $K$ layers termed ADMM-Net. ADMM-Net refers to a neural network (i.e., as indicated by the suffix -Net, which comes from Net-work) that is based off of the ADMM iterative method. The neural network may be implemented, for example, by system 200 in which the various cores 208 depicted in FIG. 2 are utilized to perform the processing of the different layers in the ADMM-Net. In such an implementation, the equation governing the input-output relationship between the neural nodes (i.e., cores 208 of system 200) at a given layer $k$ for a generic ADMM-Net neural network is given by the expression.

$$\mathbf{u}^{(k+1)} = (\mathbf{W}_k + \rho_k\mathbf{I})^{-1}\left(\mathbf{A}^H\mathbf{y} + \rho_k R_{\tau_k}\big(\mathbf{u}^{(k)}\big)\right) + S'_{\tau_k}\big(\mathbf{u}^{(k)}\big) \qquad (13)$$

In expression (13), $\mathbf{W}_k$, $\tau_k$, and $\rho_k$ are the learnable parameters of the $k$-th layer.

In a generic ADMM-Net neural network that is configured to solve expression (13) (as described above), i.e. without imposing any hermitian-centrohermitian or circulant constraints on $\mathbf{W}_k$, the full matrix $\mathbf{W}_k$, of size $L$ by $L$ and with $L^2$ unique elements is required to be fully characterized and stored in memory. Additionally, the product of $(\mathbf{W}_k + \rho_k\mathbf{I})^{-1}$ with

($\mathbf{A}^H\mathbf{y} + \rho_k R_{\tau_k}(\mathbf{u}^{(k)})$), which dominates the computational complexity of equation (13), requires $\mathcal{O}(L^2)$ multiply and add operations, where here it is assumed that after training the neural network, the matrix $(\mathbf{W}_k + \rho_k\mathbf{I})^{-1}$ is computed and stored for use by each layer in the network.

In the present approach, however, in keeping with the definition $\mathbf{H} = \mathbf{A}^H\mathbf{A}$, it is possible to impose either a hermition-centrohermitian (HCH) (i.e., a square matrix that is equal to the transpose of its conjugate matrix and that is equal to the matrix obtained by exchanging the rows and the columns of the matrix's conjugate) or a circulant (C) (e.g., a square matrix in which all rows are composed of the same elements and each row is rotated one element to the right relative to the preceding row) constraint on $\mathbf{W}_k$,

Consequently, $\mathbf{W}_k$ may be structured as a hermitian-centrohermitian matrix or be circulant. As such, the ADMM-Net may be implemented as an HCHADMM-Net neural network, in which a hermitian-centrohermitian constraint is imposed on $W_k$ during the training phase of the neural network. If the ADMM-Net is implemented as a CADMM-Net neural network, a circulant constraint is imposed on $W_k$ during the training phase of the neural net.

Given these constraints and for a frequency grid **f** that covers a prescribed field of view $[-\theta_0, \theta_0]$ of radar system 100, and is symmetrical with respect to its center, $f_i = f_{L-i+1}$, without necessarily being uniform, **H** will be both a hermitian and centrohermitian (HCH) matrix. As such, $H(i,j) = H^*(j, i)$ and $H(i,j) = H^*(L - j + 1, L - i + 1)$. Additionally, given the properties of hermitian and centrohermitian matrices, $(\mathbf{H} + \rho\mathbf{I})^{-1}$ will also be HCH. In HCHADMM-Net (i.e., with a hermitian-centro-hermitian constraint imposed on $\mathbf{W}_k$), $\mathbf{W}_k$ will now require $\dfrac{(L+1)^2 - \mathrm{mod}(L+1,2)}{4}$ (which is approximately $L^2/4$) unique elements for a full characterization rather than $L^2$ for a generic ADMM-Net network. Consequently, the number of multiply and add operations per layer of the HCHADMM-Net will be the same as that of a generic ADMM-Net network, namely $\mathcal{O}(L^2)$, which is a significant reduction in computational cost compared to the recursive approach described above.

In particular, for the special case of a $\beta/2$ array grid that corresponds to a MIMO virtual array (e.g., e.g., the virtual array constructed by MIMO array measurement construction 158 of FIG. 1B) having its elements positioned at corrdinates $d_1, d_2, ..., d_N$ (see expression (2)) where each $d_i$ is expressed as an integer multiple of $\lambda/2$, where $\lambda$ is the wavelength that corresponds to the operating frequency of the radar, a full field of view $[-\theta_0, \theta_0] = [90°, 90°]$ and a uniformly sampled frequency grid **f,** the hermitian centrohermitian matrix **H** reduces to a circulant matrix. This constraint, if implemented in a particular radar system 100, can be greatly beneficial to the present approach for signal processing approach. The uniformly sampled frequency grid **f,** may be generated for example by a radar system implementing a MIMO virtual array with antenna elements evenly spaced from one another by a multiple of a unit value, such as half of a wavelength of the signals received by the radar system. In CADMM-Net, a circulant constraint is imposed on $\mathbf{W}_k$, This is possible due to the fact that the matrix **A** (i.e., the dictionary matrix of the form of expression (2)), specifies a particular spacing geometry for the antennas in the radar system and the angular grid covers the full ideal field of view $[-90°, 90°]$. With those constraints, $\mathbf{W}_k$ can now be fully characterized by only $L$ parameters per layer, and with the properties of circulant matrices and the fact that $\rho_k\mathbf{I}$ is circulant, $(\mathbf{W}_k + \rho_k\mathbf{I})^{-1}$ will also be a circulant matrix. Assuming $\mathbf{A}^H\mathbf{y}$ is computed and stored for reuse by each layer of the CADMM-Net neural net, the computational cost of solving expression (13) can be reduced to $\mathcal{O}(L\log(L))$. This compares beneficially to the conventional approach described above that is based on a generic ADMM-Net neural network, and which exhibits an $\mathcal{O}(L^2)$ complexity and requires the storage of $L^2$ parameters per layer.

With this constraint, and using the eigen decomposition of circulant matrices, expression (13) can thus be reformulated as:

$$\mathbf{u}^{(k+1)} = \mathbf{F}^{-1}\mathrm{diag}(\mathbf{v}_k)\mathbf{F}\left(\mathbf{A}^H\mathbf{y} + \rho_k R_{\tau_k}(\mathbf{u}^{(k)})\right) + S'_{\tau_k}(\mathbf{u}^{(k)}) \qquad (14)$$

In expression (14), $\mathbf{v}_k, \tau_k, \rho_k$ are leamable parameters, and **F** is the discrete Fourier transform (DFT) matrix of size $L$ by $L,$ and $\mathbf{F}^{-1}$ is the inverse Fourier transform matrix (IDFT). Products of the form $\mathbf{FZ}$ and $\mathbf{F}^{-1}\mathbf{Z}$ can be computed efficiently using FFTs, and require $\mathcal{O}(L\log(L))$ operations. During processing, each node in the neural network may solve a separate iteration of expression (14). Specifically, the iterative steps in which expression (14) is solved are pipelined so that the first core (e.g., a first core 208 of system 200) computes $\mathbf{u}^{(1)}$ the first iteration $k = 1$ ( for $k = 0$, $\mathbf{u}^{(0)}$ is simply initialized with the null vector **0**), and then the result from the first core is fed to a second core (e.g., a second core 208 of system 200) to compute $\mathbf{u}^{(2)}$ the second iteration, and so on. After the final iteration $\mathbf{u}^{(K)}$ is solved by a final core, and the optimized output amplitude vector x is recovered by computing x = $S_\tau(\mathbf{u}^{(K)})$ (i.e., expression (12)) using the activation engine (e.g., activation engine 304 of a final core 208 of system 200) of the last core in the network. In that case, various steps in expression (14) may be performed by different subcomponents of each core. For example, the vector additions $\mathbf{A}^H\mathbf{y} + \rho_k R_{\tau_k}(\mathbf{u}^{(k)})$ and vector multiplications $\rho_k R_{\tau_k}$ could be performed by vector sum/multiplication machine 302 of a core 208, the evaluation of the activation functions $R_{\tau_k}(\mathbf{u}^{(k)})$ and S'$_{\tau_k}(\mathbf{u}^{(k)})$ could be performed by activation engine 304 of a core 208, and the product **F**$(\mathbf{A}^H\mathbf{y} + \rho_k R_{\tau_k}(\mathbf{u}^{(k)}))$ that involves the DFT matrix **F** with the vector $(\mathbf{A}^H\mathbf{y} + \rho_k R_{\tau_k}(\mathbf{u}^{(k)}))$ could be implemented by the FFT engine 306. The product that involves the IDFT matrix $\mathbf{F}^{-1}$ and the vector $\text{diag}(\mathbf{v}_k)\mathbf{F}(\mathbf{A}^H\mathbf{y} + \rho_k R_{\tau_k}(\mathbf{u}^{(k)}))$ could be implemented by the FFT engine 306 as well.

Assuming the weights $(\mathbf{W}_k + \rho_k\mathbf{I})^{-1}$, $\mathbf{v}_k$, $\tau_k$, and $\rho_k$ corresponding to HCHADMM-Net and CADMM-Net are all stored in a memory (e.g., a memory of radar processor 20 of radar system 100 of FIG. 1A) for each layer k, the first core in the cluster 202 is initialized with the zero vector $\mathbf{u}^{(0)} = \mathbf{0}$ and the MIMO virtual array measurement vector output $\mathbf{y}$. Next, $(\mathbf{W}_1 + \rho_1\mathbf{I})^{-1}$ or $\mathbf{v}_1$ will be loaded from the memory, depending on whether HCHADMM-Net or CADMM-Net is implemented, respectively. $\tau_k$, and $\rho_k$ will then be loaded from memory as well, and expressions (13) or (14), depending, again whether HCHADMM-Net or CADMM-Net are implemented, respectively, will be computed using the core's machines and engines and will output $\mathbf{u}^{(1)}$. The second core will take in as an input $\mathbf{u}^{(1)}$ and $\mathbf{y}$, and then $(\mathbf{W}_2 + \rho_2\mathbf{I})^{-1}$ or $\mathbf{v}_2$ will be loaded from memory along with $\tau_2$, and $\rho_2$ and (13) or (14) will again be implemented. This procedure is repeated all the way up to the second-to-last core, which will output $\mathbf{u}^{(K)}$. The final core will then load $\tau$ from memory and will recover $\mathbf{x}$ by computing $\mathbf{x} = S_\tau(\mathbf{u}^{(K)})$ using its activation engine. The location of the peaks contained in $\mathbf{x}$ with respect to the angular grid will correspond to the DoA angle estimates.

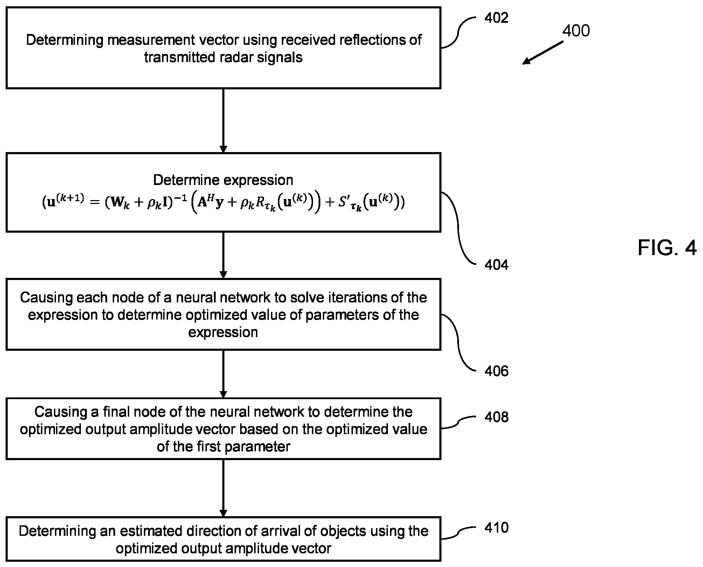

In a further example of the present, FIG. 4 is a flowchart depicting method 400 for determining a DoA of an object using an ADMM-Net neural network implemented by a plurality of processing cores. Method 400 may be implemented, for example, by radar processor 20 of FIG. 1A, with the neural network being implemented by cluster 202 of system 200 of FIG. 2, as described above.

At block 402 of method 400, signals received by the radar systems (e.g., received via RX antenna elements 104 of radar system 100 of FIG. 1A) are processed to determine a measurement vector (e.g., measurement vector $\mathbf{y}$ of expression (1), above). At block 404, an expression (i.e., expression (13), above) is determined that is an expression defining an iteration of an optimization problem configured to determine an optimized output amplitude vector based on the measurement vector. The expression includes parameters (e.g., $\mathbf{W}_k$, above) that is a hermitian-centrohermitian matrix or a circulant matrix. That characteristic, as described above enables efficient calculation of various iterations of the expression in a neural network.

As such, at block 406, having determined the expression at block 404, various nodes of a neural network (e.g., core 208 of cluster 202 of FIG. 2) are configured to solve different iterations of the expression, as described above. As the nodes iteratively solve the expression, the parameters are continuously optimized. At block 408 a final node in the neural network determines, using the outputs of the other nodes an optimized output amplitude based on, at least the optimized parameters of the expression generated by the other nodes. As discussed above, the optimized output amplitude vector $\mathbf{x}$ can be determined by the final node in the neural network using the expression $\mathbf{x} = S_\tau(\mathbf{u}^{(K)})$ based on the outputs of the preceding neural network node.

Finally, at block 410 an estimated direction of arrival of one or more objects in a vicinity of the radar system are determined using conventional DoA processing of the optimized output amplitude vector.

In some aspects, the techniques described herein relate to a radar system including: a plurality of transmitter modules configured to transmit a plurality of transmitted radar signals; a plurality of receiver modules configured to receive reflections of the plurality of transmitted radar signals reflected by at least one object and to generate signals based on the received reflections; and a processor configured to: determine a measurement vector using signals received by the plurality of receiver modules, implement a neural network including a plurality of nodes arranged in a plurality of layers; determine an optimized output amplitude vector, wherein the optimized output amplitude vector defines a radar signal spectrum having peaks associated with the at least one object, by performing steps including: determining an expression defining an iteration of an optimization problem configured to determine the optimized output amplitude, wherein the expression includes a plurality of learnable parameters, causing each node of the plurality of nodes in the neural network to iteratively solve the expression to determine optimized values of the plurality of learnable parameters, and determining, by a final node in the plurality of nodes, the optimized output amplitude vector based on the optimized values of the plurality of learnable parameters determined by another node in the plurality of nodes, wherein the optimized output amplitude vector is a sparse signal vector; and determine an estimated direction of arrival of a first object using the optimized output amplitude vector.

In some aspects, the techniques described herein relate to a radar system, wherein the signals received by the plurality of receiver modules are associated with a MIMO virtual array with antenna elements positioned at integer multiples of unit value.

In some aspects, the techniques described herein relate to a radar system, wherein the unit value is equal to half of a wavelength of the signals received by the plurality of receiver modules.

In some aspects, the techniques described herein relate to a radar system, wherein a first learnable parameter in the plurality of learnable parameters is a hermitian-centrohermitian matrix.

In some aspects, the techniques described herein relate to a radar system, wherein a first learnable parameter in the plurality of learnable parameters is a circulant matrix.

In some aspects, the techniques described herein relate to a radar system, wherein the neural network is implemented using an alternating direction method of multipliers (ADMM) model.

In some aspects, the techniques described herein relate to a radar system, wherein the processor includes a plurality of processor cores and each node in the plurality of nodes is implemented by a processor core out of the plurality of processor cores.

In some aspects, the techniques described herein relate to a radar system, wherein each processor core of the plurality of processor cores is implemented by an application-specific integrated circuit (ASIC).

In some aspects, the techniques described herein relate to a radar system, wherein the expression includes activation functions that are executed by each node in the neural network.

In some aspects, the techniques described herein relate to a radar system including: a plurality of transmitter modules configured to transmit a plurality of transmitted radar signals; a plurality of receiver modules configured to receive reflections of the plurality of transmitted radar signals reflected by at least one object; a plurality of processor cores, wherein each processing core in the plurality of processing cores is associated with layers of a neural network; and a processor configured to: determine a measurement vector using signals received by the plurality of receiver modules, determining an expression defining an iteration of an optimization problem configured to determine an optimized output amplitude vector, wherein the expression includes a first parameter that is a hermitian-centrohermitian matrix or a circulant matrix, causing each processor core of the plurality of processor cores to solve iterations of the expression to determine an optimized value of the first parameter, causing a final processor core of the plurality of processor cores to determine optimized output amplitude vector based on the optimized value of the first parameter, wherein the optimized output amplitude vector is a sparse signal vector, and determine an estimated direction of arrival of a first object using the optimized output amplitude vector.

In some aspects, the techniques described herein relate to a radar system, wherein the signals received by the plurality of receiver modules are associated with a MIMO virtual array with antenna elements positioned at integer multiples of unit value.

In some aspects, the techniques described herein relate to a radar system, wherein the unit value is equal to half of a wavelength of the signals received by the plurality of receiver modules.

In some aspects, the techniques described herein relate to a radar system, wherein the neural network is implemented using an alternating direction method of multipliers (ADMM) model.

In some aspects, the techniques described herein relate to a radar system, wherein each processor core of the neural network is implemented by application-specific integrated circuits (ASIC).

In some aspects, the techniques described herein relate to a radar system, wherein the expression includes activation functions that are executed by each node in the neural network.

In some aspects, the techniques described herein relate to a method, including: determining a measurement vector using signals received a plurality of radar receiver modules; determining an expression defining an iteration of an optimization problem configured to determine an optimized output amplitude vector based on the measurement vector, wherein the expression includes a first parameter that is a hermitian-centrohermitian matrix or a circulant matrix; causing each node of a neural network to solve iterations of the expression to determine an optimized value of the first parameter; causing a final node of the neural network to determine optimized output amplitude vector based on the optimized value of the first parameter; and determining an estimated direction of arrival of a first object using the optimized output amplitude vector.

In some aspects, the techniques described herein relate to a method, further including determining the signals received by the plurality of radar receiver modules are associated with a MIMO virtual array with antenna elements evenly spaced from one another by a multiple of a unit value.

In some aspects, the techniques described herein relate to a method, further including determining the unit value is equal to half of a wavelength of the signals received by the plurality of radar receiver modules.

In some aspects, the techniques described herein relate to a method, further including implementing the neural network using an alternating direction method of multipliers (ADMM) model.

In some aspects, the techniques described herein relate to a method, wherein the expression includes activation functions and further including executing the activation functions by each node of the neural network.

As will be appreciated by one skilled in the art, aspects of the present disclosure may be embodied as a system, process, method, and/or program product. Accordingly, various aspects of the present disclosure may take the form of an entirely hardware embodiment, an entirely software embodiment (including firmware, resident software, microcode, etc.), or embodiments combining software and hardware aspects, which may generally be referred to herein as a "circuit," "circuitry," "module," or "system." Furthermore, aspects of the present disclosure may take the form of a program product embodied in one or more computer readable storage medium(s) having computer readable program code embodied thereon. (However, any combination of one or more computer readable medium(s) may be utilized. The computer readable medium may be a computer readable signal medium or a computer readable storage medium.)

A computer readable storage medium may be, for example, but not limited to, an electronic, magnetic, optical, electromagnetic, infrared, biologic, atomic, or semiconductor system, apparatus, controller, or device, or any suitable combination of the foregoing, wherein the computer readable storage medium is not a transitory signal per se. More specific examples (a non-exhaustive list) of the computer readable storage medium may include the following: an electrical connection having one or more wires, a portable computer diskette, a hard disk, a random access memory ("RAM"), a read-only memory ("ROM"), an erasable programmable read-only memory ("EPROM" or flash memory), an optical fiber, a portable compact disc read-only memory ("CD-ROM"), an optical storage device, a magnetic storage device, or any suitable combination of the foregoing. In the context of this document, a computer readable storage medium may be any tangible medium that can contain or store a program for use by or in connection with an instruction execution system, apparatus, controller, or device. Program code embodied on a computer readable signal medium may be transmitted using any appropriate medium, including but not limited to wireless, wire line, optical fiber cable, RF, etc., or any suitable combination of the foregoing.

The block diagrams in the figures illustrate architecture, functionality, and operation of possible implementations of circuitry, systems, methods, processes, and program products according to various embodiments of the present disclosure. In this regard, certain blocks in the block diagrams may represent a module, segment, or portion of code, which includes one or more executable program instructions for implementing the specified logical function(s). It should also be noted that, in some implementations, the functions noted in the blocks may occur out of the order noted in the figures. For example, two blocks shown in succession may, in fact, be executed substantially concurrently, or the blocks may sometimes be executed in the reverse order, depending upon the functionality involved.

Modules implemented in software for execution by various types of processors may, for instance, include one or more physical or logical blocks of computer instructions, which may, for instance, be organized as an object, procedure, or function. Nevertheless, the executables of an identified module need not be physically located together but may include disparate instructions stored in different locations which, when joined logically together, include the module, and achieve the stated purpose for the module. Indeed, a module of executable code may be a single instruction, or many instructions, and may even be distributed over several different code segments, among different programs, and across several memory devices. Similarly, operational data (e.g., knowledge bases of adapted weights and/or biases described herein) may be identified and illustrated herein within modules, and may be embodied in any suitable form and organized within any suitable type of data structure. The operational data may be collected as a single data set, or may be distributed over different locations including over different storage devices. The data may provide electronic signals on a system or network.

These program instructions may be provided to one or more processors and/or controller(s) of a general-purpose computer, special purpose computer, or other programmable data processing apparatus (e.g., controller) to produce a machine, such that the instructions, which execute via the processor(s) of the computer or other programmable data processing apparatus, create circuitry or means for implementing the functions/acts specified in the block diagram block or blocks.

It will also be noted that each block of the block diagrams, and combinations of blocks in the block diagrams, can be implemented by special purpose hardware-based systems (e.g., which may include one or more graphics processing units) that perform the specified functions or acts, or combinations of special purpose hardware and computer instructions. For example, a module may be implemented as a hardware circuit including custom VLSI circuits or gate arrays, off-the-shelf semiconductors such as logic chips, transistors, controllers, or other discrete components. A module may also be implemented in programmable hardware devices such as field programmable gate arrays, programmable array logic, programmable logic devices, application specific ICs, microcontrollers, systems on a chip, general purpose processors, microprocessors, or the like.

Computer program code, i.e., instructions, for carrying out operations for aspects of the present disclosure may be written in any combination of one or more programming languages, including an object-oriented programming language such as Java, Smalltalk, Python, C++, or the like, conventional procedural programming languages, such as the "C" programming language or similar programming languages, or any of the machine learning software disclosed herein.

These program instructions may also be stored in a computer readable storage medium that can direct a computer system, other programmable data processing apparatus, controller, or other devices to function in a particular manner, such that the instructions stored in the computer readable medium produce an article of manufacture including instructions which implement the functions/acts specified in the block diagram block or blocks.

The program instructions may also be loaded onto a computer, other programmable data processing apparatus, controller, or other devices to cause a series of operational steps to be performed on the computer, other programmable apparatus or other devices to produce a computer implemented process such that the instructions which execute on the computer, other programmable apparatus, or other devices provide processes for implementing the functions/acts specified in the block diagram block or blocks.

The preceding detailed description is merely illustrative in nature and is not intended to limit the embodiments of the subject matter or the application and uses of such embodiments.

As used herein, the word "exemplary" means "serving as an example, instance, or illustration." Any implementation described herein as exemplary is not necessarily to be construed as preferred or advantageous over other implementations. Furthermore, there is no intention to be bound by any expressed or implied theory presented in the preceding technical field, background, or detailed description.

The connecting lines shown in the various figures contained herein are intended to represent exemplary functional relationships and/or physical couplings between the various elements. It should be noted that many alternative or additional functional relationships or physical connections may be present in an embodiment of the subject matter. In addition, certain terminology may also be used herein for the purpose of reference only, and thus are not intended to be limiting, and the terms "first", "second" and other such numerical terms referring to structures do not imply a sequence or order unless clearly indicated by the context.

As used herein, a "node" means any internal or external reference point, connection point, junction, signal line, conductive element, or the like, at which a given signal, logic level, voltage, data pattern, current, or quantity is present. Furthermore, two or more nodes may be realized by one physical element (and two or more signals can be multiplexed, modulated, or otherwise distinguished even though received or output at a common node).

The foregoing description refers to elements or nodes or features being "connected" or "coupled" together. As used herein, unless expressly stated otherwise, "connected" means that one element is directly joined to (or directly communicates with) another element, and not necessarily mechanically. Likewise, unless expressly stated otherwise, "coupled" means that one element is directly or indirectly joined to (or directly or indirectly communicates with, electrically or otherwise) another element, and not necessarily mechanically. Thus, although the schematic shown in the figures depict one exemplary arrangement of elements, additional intervening elements, devices, features, or components may be present in an embodiment of the depicted subject matter.

While at least one exemplary embodiment has been presented in the foregoing detailed description, it should be appreciated that a vast number of variations exist. It should also be appreciated that the exemplary embodiment or embodiments described herein are not intended to limit the scope, applicability, or configuration of the claimed subject matter in any way. Rather, the foregoing detailed description will provide those skilled in the art with a convenient road map for implementing the described embodiment or embodiments. It should be understood that various changes can be made in the function and arrangement of elements without departing from the scope defined by the claims, which includes known equivalents and foreseeable equivalents at the time of filing this patent application.

**Claims**

1. A radar system comprising:

   a plurality of transmitter modules configured to transmit a plurality of transmitted radar signals;
   a plurality of receiver modules configured to receive reflections of the plurality of transmitted radar signals reflected by at least one object and to generate signals based on the received reflections; and
   a processor configured to:

   determine a measurement vector using signals received by the plurality of receiver modules,
   implement a neural network comprising a plurality of nodes arranged in a plurality of layers;
   determine an optimized output amplitude vector, wherein the optimized output amplitude vector defines a radar signal spectrum having peaks associated with the at least one object, by performing steps including:

   determining an expression defining an iteration of an optimization problem configured to determine the optimized output amplitude, wherein the expression includes a plurality of leamable parameters,
   causing each node of the plurality of nodes in the neural network to iteratively solve the expression to determine optimized values of the plurality of leamable parameters, and
   determining, by a final node in the plurality of nodes, the optimized output amplitude vector based on the optimized values of the plurality of learnable parameters determined by another node in the plurality of nodes, wherein the optimized output amplitude vector is a sparse signal vector; and

   determine an estimated direction of arrival of a first object using the optimized output amplitude vector.

2. The radar system of claim 1, wherein the signals received by the plurality of receiver modules are associated with a MIMO virtual array with antenna elements positioned at integer multiples of unit value.

3. The radar system of claim 2, wherein the unit value is equal to half of a wavelength of the signals received by the plurality of receiver modules.

4. The radar system of claim 3, wherein a first leamable parameter in the plurality of learnable parameters is a hermitian-centrohermitian matrix.

5. The radar system of claim 3, wherein a first leamable parameter in the plurality of learnable parameters is a circulant matrix.

6. The radar system according to any preceding claim, wherein the neural network is implemented using an alternating direction method of multipliers (ADMM) model.

7. The radar system according to any preceding claim, wherein the processor includes a plurality of processor cores and each node in the plurality of nodes is implemented by a processor core out of the plurality of processor cores.

8. The radar system of claim 7, wherein each processor core of the plurality of processor cores is implemented by an application-specific integrated circuit (ASIC).

9. The radar system according to any preceding claim, wherein the expression includes activation functions that are executed by each node in the neural network.

10. A method, comprising:

   determining a measurement vector using signals received a plurality of radar receiver modules;
   determining an expression defining an iteration of an optimization problem configured to determine an optimized output amplitude vector based on the measurement vector, wherein the expression includes a first parameter that is a hermitian-centrohermitian matrix or a circulant matrix;
   causing each node of a neural network to solve iterations of the expression to determine an optimized value of the first parameter;
   causing a final node of the neural network to determine optimized output amplitude vector based on the optimized value of the first parameter; and
   determining an estimated direction of arrival of a first object using the optimized output amplitude vector.

11. The method of claim 10, further comprising determining the signals received by the plurality of radar receiver modules are associated with a MIMO virtual array with antenna elements evenly spaced from one another by a multiple of a unit value.

12. The method of claim 11, further comprising determining the unit value is equal to half of a wavelength of the signals received by the plurality of radar receiver modules.

13. The method according to any of claims 10 to 12, further comprising implementing the neural network using an alternating direction method of multipliers (ADMM) model.

14. The method according to any of claims 10 to 13, wherein the expression includes activation functions and further comprising executing the activation functions by each node of the neural network.

FIG. 1A

FIG. 1B

FIG. 2

FIG. 3

Determining measurement vector using received reflections of transmitted radar signals — 402

400

Determine expression
$$\left(\mathbf{u}^{(k+1)} = (\mathbf{W}_k + \rho_k \mathbf{I})^{-1}\left(\mathbf{A}^H \mathbf{y} + \rho_k R_{\tau_k}(\mathbf{u}^{(k)})\right) + S'_{\tau_k}(\mathbf{u}^{(k)})\right)$$
— 404

Causing each node of a neural network to solve iterations of the expression to determine optimized value of parameters of the expression — 406

Causing a final node of the neural network to determine the optimized output amplitude vector based on the optimized value of the first parameter — 408

Determining an estimated direction of arrival of objects using the optimized output amplitude vector — 410

FIG. 4

Europäisches
Patentamt

European
Patent Office

Office européen
des brevets

# EUROPEAN SEARCH REPORT

**Application Number**

**EP 25 19 6338**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 117 331 021 A (UNIV XI AN JIAOTONG) 2 January 2024 (2024-01-02) * figures 1,2 * * paragraph [0002] - paragraph [0017] * * paragraph [0040] - paragraph [0047] * * paragraph [0065] - paragraph [0093] * ----- | 1-14 | INV. G01S7/41 G01S13/34 G01S13/58 G01S13/931 |
| A | CN 114 114 187 A (CHINESE PEOPLE LIBERATION ARMY AND NATIONAL DEFENSE SCIENCE AND TECHNO) 1 March 2022 (2022-03-01) * figure 3 * ----- | 1-14 | |
| | | | TECHNICAL FIELDS SEARCHED (IPC) G01S |

The present search report has been drawn up for all claims

| Place of search | Date of completion of the search | Examiner |
|---|---|---|
| Munich | 23 January 2026 | Heiß, Michael |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
...........................................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 25 19 6338

This annex lists the patent family members relating to the patent documents cited in the above-mentioned European search report.
The members are as contained in the European Patent Office EDP file on
The European Patent Office is in no way liable for these particulars which are merely given for the purpose of information.

23-01-2026

| Patent document<br>cited in search report | Publication<br>date | Patent family<br>member(s) | Publication<br>date |
|---|---|---|---|
| CN 117331021 A | 02-01-2024 | NONE | |
| CN 114114187 A | 01-03-2022 | NONE | |

EPO FORM P0459

For more details about this annex : see Official Journal of the European Patent Office, No. 12/82